# FASCICULE DE BREVET EUROPEEN

(11) **EP 3 548 930 B1**
(45) Date de publication et mention de la délivrance du brevet: **04.06.2025**
(21) Numéro de dépôt: 17822555.3
(22) Date de dépôt: 28.11.2017
(51) Int. Cl.: G01V 1/00, G01V 1/30, G01V 1/38

(54) **PROCÉDÉ D'AMÉLIORATION DES ACQUISITIONS SISMIQUES METTANT EN OEUVRE DES SYSTÈMES ACTIFS ULTRALÉGERS DE DÉTECTION SISMIQUE**
VERFAHREN ZUR VERBESSERUNG VON SEISMISCHEN AUFNAHMEN MITHILFE VON AKTIVEN ULTRALEICHTEN SYSTEMEN ZUR SEISMISCHEN DETEKTION
METHOD FOR IMPROVING SEISMIC ACQUISITIONS UTILISING ACTIVE ULTRALIGHT SEISMIC DETECTION SYSTEMS

(30) Priorité: 02.12.2016 FR 1661842; 25.07.2017 FR 1757024
(43) Date de publication de la demande: 09.10.2019
(73) Titulaire: SpotLight, 75013 Paris (FR)
(72) Inventeur: AL-KHATIB, Habib, 75013 Paris (FR); MORGAN, Elodie, 75013 Paris (FR)
(74) Mandataire: Argyma
(86) Numéro de dépôt international: PCT/EP2017/080582
(87) Numéro de publication internationale: WO 2018/099880

(56) Documents cités:
- CN-B- 102 944 897
- US-A- 4 188 610
- US-A1- 2009 052 280
- US-A1- 2010 080 081
- US-A1- 2011 273 959
- US-A1- 2016 161 620
- US-A1- 2016 162 613

## Description

La présente invention concerne d'une manière générale l'acquisition de données sismiques dans les domaines terrestre et marin.

Il est connu de l'art antérieur que l'acquisition de données sismiques permet de générer une image de la structure géophysique du sous-sol. Bien que cette image ne permette pas d'indiquer précisément la localisation des ressources naturelles, telles que du pétrole ou du gaz, elle permet néanmoins, pour une personne du métier, de déterminer la présence ou l'absence de ces ressources. Ainsi, la production en continue de telles images fait partie intégrante du processus d'exploration des sous-sols dans le but de découvrir ces ressources naturelles. Afin de produire ces images, il est connu de l'art antérieur plusieurs méthodes. Pour une exploration en mer, il est possible de mettre en œuvre un bateau tirant des flûtes sismiques ou streamers en anglais. Ces streamers peuvent être disposés horizontalement, à une profondeur constante par rapport au fond de la mer. Le bateau tire également un ensemble de sources sismiques apte à générer des ondes sismiques. Ces ondes sismiques se propagent vers le fond de la mer et le traverse pour le pénétrer jusqu'à rencontrer une structure réfléchissante pour ainsi les réfléchir. Ces ondes sismiques réfléchies se propagent vers la surface de la mer jusqu'à être détectées par des capteurs sismiques intégrés aux streamers. En se basant sur ces données sismiques, il est alors possible de générer une image du sous-sol. S'il est utilisé un seul streamer, on parle alors d'une image 2D. S'il est utilisé plusieurs streamers tirés simultanément par le bateau, on parle d'une image 3D. Une image 4D est obtenue lorsque deux acquisitions sismiques 3D sont effectuées dans la même zone, mais avec un décalage dans le temps. La première acquisition est effectuée à un temps t0 et la seconde à un temps t0+t, t pouvant être égal à plusieurs mois ou plusieurs années par exemple.

De manière alternative, il est également possible d'enregistrer des données sismiques en utilisant des câbles ou des capteurs posés sur le fond de mer, ces techniques s'appellent ocean bottom cables (OBC), ocean bottom nodes (OBN) ou ocean bottom seismometers (OBS). Par exemple, dans le cas d'une acquisition OBC, une pluralité de capteurs sont connectés entre eux dans un câble. Plusieurs de ces câbles sont ensuite posés sur le fond de la mer, dans la zone à étudier. Il est également possible d'intégrer un ou plusieurs capteurs dans un véhicule aquatique sous-marin. Ce véhicule, éventuellement autonome, se pose sur le fond de la mer afin d'enregistrer des données sismiques. Il est ensuite récupéré par un bateau pour y transférer ces données sismiques.

Dans le cas d'une acquisition sismique terrestre, un système dédié à une acquisition 4D comprend plusieurs capteurs, par exemple des hydrophones ou des accéléromètres, positionnés sur une zone où l'on veut explorer le sous-sol. Ces capteurs sont en contact avec le sol. Plusieurs sources sismiques sont également placées sur le sol, dans la zone à étudier. Un dispositif d'enregistrement est connecté aux capteurs et localisé, par exemple, dans un camion. Chaque source sismique comprend un nombre variable de vibrateurs, typiquement entre un et cinq, et peut comprendre également un contrôleur local. Un contrôleur central peut être présent afin de coordonner les temps de tir des sources sismiques. Un système GPS peut être mis en œuvre afin de corréler dans le temps le tir des sources et les données acquises par les capteurs. Dans cette configuration, les sources sismiques sont contrôlées pour générer des ondes sismiques, et la pluralité de capteurs enregistre les ondes réfléchies par des réservoirs de pétrole ou de gaz, ou d'autres structures. L'étude sismique peut être répétée à divers moments dans le temps, par exemple tous les mois ou tous les ans, afin d'imager de nouveau le sous-sol de manière à déterminer les changements persistants sur la période dans les réservoirs.

Toutes ces techniques peuvent être utilisées pour surveiller un réservoir de production. Pour ces configurations, le but du traitement 4D est de déterminer comment et où les propriétés pétrophysiques changent en évaluant les différences dans les données sismiques acquises à divers moments, en général avant l'exploitation d'un réservoir, il s'agit de l'étude de référence (baseline survey), et après l'exploitation de ce même réservoir, il s'agit de l'étude de surveillance (monitor survey). Actuellement, les solutions d'étude 4D ont pour objet la mise à jour complète d'une acquisition 3D du sous-sol pour une zone considérée. En d'autres termes, la baseline survey et la monitor survey acquièrent un volume important de données sismiques afin d'obtenir une image 3D complète. Par conséquent, les techniques actuelles prennent beaucoup de temps, de l'ordre de plusieurs semaines à plusieurs mois, sont relativement peu précises d'un point de vue de la répétabilité, car utilisant des systèmes non permanents, et génèrent des coûts importants. Tous ces facteurs représentent une barrière au développement des études 4D.

Dans l'état de la technique, il est par exemple connu l'enseignement du document US2011/0273959A1 qui décrit un procédé appelé « analyse de visibilité' » permettant l'identification des positions des sources et des capteurs sismiques pouvant révéler au mieux les détails d'une structure en sous-sol. Pour y parvenir, le document US2011/0273959A1 enseigne de mettre en œuvre un procédé de migration pour simuler des traces.

Par conséquent, il existe un besoin pour rendre moins coûteuses les études 4D, mais également les rendre plus rapides et plus précises.

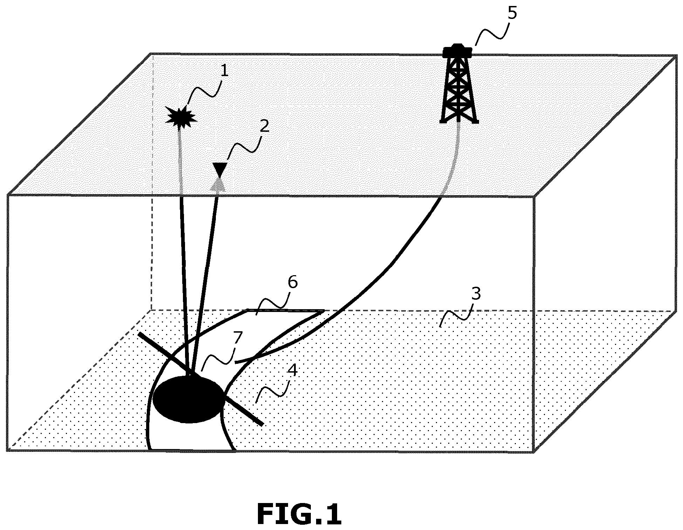

Ainsi, l'invention a notamment pour but d'améliorer la sensibilité et par conséquent le niveau de détection des systèmes actifs sismiques ultra légers. Il est décrit sur la figure 1 un exemple de système actif de détection sismique ultraléger. Le terme ultraléger veut dire qu'il est mis en œuvre un nombre limité de couples source-récepteur par rapport à une acquisition sismique classique pour laquelle plusieurs centaines à plusieurs millions de couples source-récepteur sont utilisés. On peut voir ici un seul couple source 1 et récepteur 2. Il peut également être mis en œuvre une antenne de sources et une antenne de récepteurs. Une antenne de sources, respectivement de récepteurs, comporte une agglomération de sources, respectivement de récepteurs. Ils sont, par exemple, assemblés par soudage. L'antenne de sources se comporte comme s'il s'agissait d'une source unique et l'antenne de récepteurs comme un récepteur unique. Une antenne de sources permet de focaliser l'émission des ondes et une antenne de récepteurs permet de focaliser la réception de ces ondes. Cette technique est appelée beam steering en anglais. En outre, cela permet de créer un filtre de bruit. Il est également représenté l'aquifère 3, la faille 4, le réservoir de gaz 6, la zone d'intérêt ou spot 7 et le lieu de production 5. La limitation du nombre de couples source-récepteur rend les méthodes spatiales classiques de suppression de bruit peu applicables. Ils peuvent parfois masquer des effets de production faibles, à savoir une modification de moins de 1% des propriétés sismiques dues aux variations des propriétés physiques du spot sur l'échelle de temps considérée. Cela est notamment vrai sur des échelles de temps très courtes, par exemple environ 3 mois, une journée ou une heure, pendant lesquelles les effets sismiques induits par la production sont faibles. La détection de ces variations permet d'anticiper un effet à venir, comme par exemple un changement de saturation, qui sont normalement visibles sur des périodes plus longues ainsi que leurs effets associés. Les effets, sur une période courte, traduisent l'excitation précoce de la zone d'intérêt sous l'effet d'un changement.

Ainsi, il existe une nécessité d'augmenter la sensibilité de détection sur de courtes périodes pour les systèmes actifs sismiques ultralégers.

Afin de répondre à ce problème, l'invention a pour objet un procédé de détermination du positionnement optimal de couples source-récepteur aptes à acquérir des données sismiques, tel que décrit dans l'objet de la revendication 1.

De préférence, la démigration de la troisième étape est effectuée par gamme d'octave.

De préférence, l'acquisition sismique antérieure est une acquisition 4D.

De préférence, la cinquième étape comporte en outre l'utilisation de modèles pétro-élastiques afin de sélectionner les traces brutes optimales.

De préférence, la cinquième étape comporte en outre une sélection tenant compte des facteurs de surface.

De préférence, la cinquième étape comporte en outre une sélection tenant compte d'une zone de référence servant d'étalonnage de variations sismiques.

De préférence, la troisième étape comporte en outre l'obtention de la pente et de la direction d'émission et de réception optimales des ondes sismiques pour chaque couple source-récepteur.

De préférence, le procédé comprend en outre une septième étape de placement de couples source-récepteur auxdites positions optimales et une huitième étape d'acquisition de nouvelles données sismiques auxdites positions optimales.

De préférence, la huitième étape se base sur la pente et la direction d'émission et de réception optimales des ondes sismiques.

L'invention sera mieux comprise à la lecture de la description qui suit, faite en référence aux figures annexées, dans lesquelles :
- la figure 1 illustre un exemple de système actif de détection sismique ultraléger ;
- la figure 2 illustre un mode de réalisation de la présente invention ;
- la figure 3 illustre un autre exemple de mise en œuvre de l'invention ;
- la figure 4 illustre un exemple de mise en œuvre du procédé de sélection d'au moins une trace optimale objet de la présente invention ;
- la figure 5 illustre une onde sismique traversant une zone de référence.
- la figure 6 illustre un exemple de traitement d'une trace brute sismique par le procédé mis en œuvre dans la présente invention.

Il est connu de l'état de la technique l'utilisation d'agents chimiques, tels que des polymères, lors de l'extraction de fluides situés dans un sous-sol. Ils permettent l'amélioration de rendement du taux de récupération supérieur à 10%. L'utilisation de ces agents chimiques est encore plus justifiée dans les cas de récupération secondaire de fluide. Ces polymères sont injectés en amont d'une phase de récupération secondaire, c'est-à-dire une nouvelle injection, de manière à créer un moyen de poussée, ayant des effets similaires à celui d'un piston, et qui sera ensuite poussé. Par ailleurs, dans une majorité de cas, une sismique 2D ou 3D a déjà été acquise et traitée. Cela permet d'avoir accès, notamment, à des informations telles qu'un modèle de vitesse, une image sismique migrée, un modèle de multiples, des traces sismiques brutes et prétraitées ainsi que la localisation exacte des sources et récepteurs, notamment utilisées pour l'image existante 2D ou 3D, et un modèle de statique pour les données terrestres. La connaissance et l'interprétation du sous-sol permettent d'obtenir les informations telles que les propriétés élastiques des roches de la cible et l'effet de production sismique attendu, c'est-à-dire la variation des propriétés élastiques sous l'effet de production. La connaissance du terrain permet également de compléter notamment les informations telles qu'une obstruction de surface (route, pipeline, puits, plateforme, usine, habitation, etc.) ou un générateur de bruits sismiques non répétables.

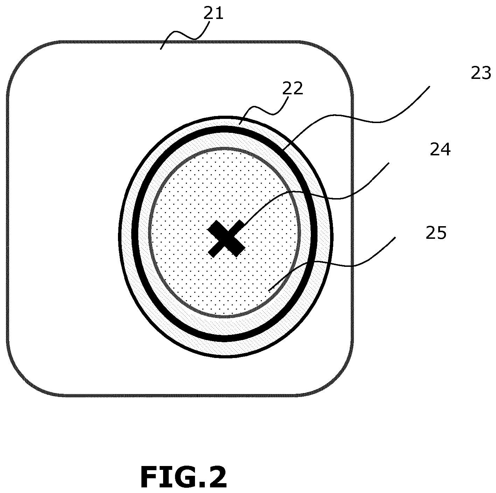

Selon un exemple qui ne fait pas partie de l'invention, il peut être prévu l'incorporation d'un agent de contraste sismique dans les injections de fluides, pouvant être liquide ou gazeux afin d'améliorer les acquisitions sismiques mettant en œuvre des systèmes ultralégers de détection sismique. La plupart des systèmes ultralégers de détection sismique visent à détecter les changements liés à la production d'un fluide ou d'un gaz. Des agents chimiques, tels que des polymères, sont utilisés pour améliorer le taux de récupération du pétrole à extraire. Il est ainsi possible d'injecter, en complément des agents chimiques et/ou du fluide d'injection, un agent de contraste sismique amplifiant ou diminuant de façon sensible la réponse sismique. Cela permet d'augmenter la réponse sismique de l'injection et donc de pouvoir détecter, le plus rapidement possible, l'arrivée du front du fluide injecté dans la zone surveillée. Les agents chimiques étant la plupart du temps à l'avant du front et formant ainsi ce qui peut être appelé un piston chimique. Un tel agent chimique, liquide ou gazeux, est injecté à l'intérieur du piston chimique, à l'avant ou l'arrière de celui-ci. De préférence, l'agent de contraste sismique doit être neutre vis-à-vis du piston chimique, c'est-à-dire qu'il ne doit pas réduire les propriétés de l'agent chimique utilisé. L'agent de contraste sismique peut comprendre des nanoparticules à forte densité ou à faible densité et/ou des nanoparticules à fréquence de résonance compatible avec les acquisitions sismiques. L'agent de contraste sismique peut également comprendre un gaz neutre tel que l'azote. Il peut également comprendre un polymère. Il est montré sur la figure 2 une nappe de pétrole 21 dans laquelle est injectée, par l'intermédiaire d'un injecteur 24, de l'eau 25 et des polymères 22. Il est également incorporé au milieu du piston de polymères 22 un agent de contraste sismique 23.

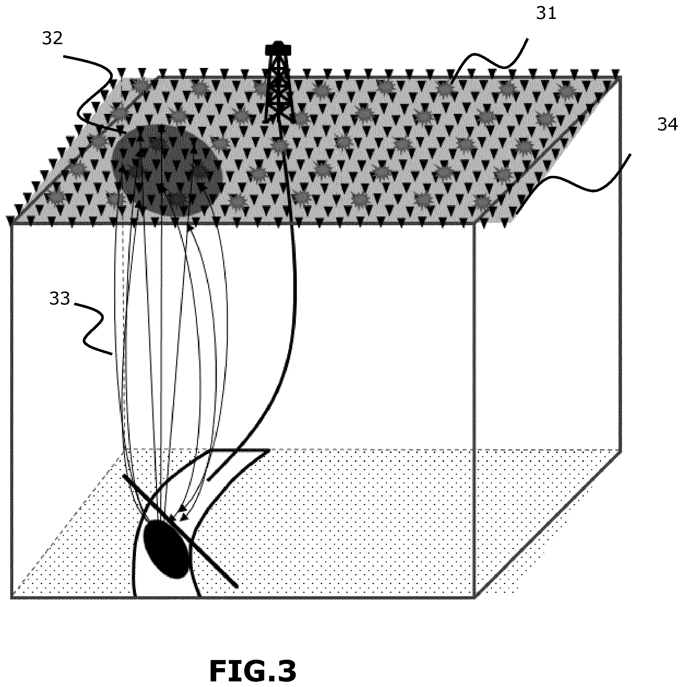

Par ailleurs, l'invention a pour objet un procédé permettant l'amélioration du positionnement des couples source-récepteur et permettant également le traitement sismique d'une trace brute unique, à savoir un enregistrement en sortie de capteur, ou moyenné dans le temps, c'est-à-dire une addition, ou un stack en anglais, dans le temps des traces brutes afin de diminuer le bruit non répétable ou d'augmenter la force du signal, dans le cadre d'un système permanent ou semi-permanent. Dans un mode de réalisation de l'invention, il est identifié la zone soumise à la détection afin de recueillir les informations disponibles pour mettre en œuvre le procédé. La première étape est l'utilisation des données sismiques existantes dans ou près de la zone d'intérêt, appelée également le spot. Ces données sismiques 2D, 3D, 4D ou de puits sont utilisées comme source d'information pour connaître le trajet des ondes sismiques dans le sous-sol étudié et en particulier dans la zone à détecter. De préférence, on regarde les points de tir centrés sur la zone à détecter, une première pré-sélection est effectuée en éliminant les offsets, c'est-à-dire les distances entre le point de tir et le récepteur, qui sont trop bruités pour une détection efficace, c'est-à-dire ayant un rapport signal à bruit trop faible. Une démigration, c'est-à-dire un tracé inverse de rayons sismiques, totale ou partielle des données sismiques disponibles est ensuite effectuée. Ce tracé de rayon inverse à partir de la zone d'intérêt permet de retrouver les positions X, Y et Z théoriques de chaque source et récepteur qui ont contribué à l'imagerie du spot d'intérêt, mais également le temps où la zone d'intérêt apparaît sur les traces brutes. Ce temps est appelé temps d'intérêt. Cette étape permet également de déterminer les pentes d'arrivée des ondes sismiques ayant illuminé la zone d'intérêt. La figure 3 est une illustration de la mise en œuvre de ce procédé. On peut y voir les sources 31 et les récepteurs 34, la zone d'intérêt ou spot 32 et les tracés de rayon inverse 33 lors de l'étape de démigration. La démigration peut également être effectuée par gamme d'octave, lorsque, par exemple la géologie est complexe et nécessite une analyse plus fine.

Il est ensuite mis en œuvre une sélection d'au moins une trace optimale. Le procédé s'applique au sein de la zone contribuant à l'imagerie de la zone d'intérêt et comprend une étape de sélection parmi trois paramètres. Le premier paramètre est la contribution effective, c'est-à-dire l'énergie ou amplitude de l'enregistrement brut, des couples source-récepteur qui a permis la construction de l'image de la zone d'intérêt dans les données sismiques 2D, 3D ou de puits existantes, mais aussi le rapport signal à bruit global de la trace. En effet, on ne regarde pas seulement le comportement de la trace dans la zone d'intérêt, mais également en dehors de la zone d'intérêt afin d'y détecter des rapports signal à bruit faibles. Une trace peut présenter un rapport signal à bruit élevé dans la zone d'intérêt, mais faible en dehors de celle-ci. De préférence, on applique un second paramètre concernant les informations dynamiques à savoir les données sismiques 4D existantes et/ou les effets de production attendus et la modélisation de leurs impacts sur la ou les traces sismiques. Ensuite, on applique un troisième paramètre concernant la prise en compte des informations de surface, comme par exemple les obstructions qui empêchent un placement de sources ou de récepteurs, les forts générateurs de bruits qu'il faut éviter, la possibilité d'accès à une source de courant ou la couverture internet qu'il faut privilégier. Dans le cas où plusieurs placements optimums ont été identifiés par la prise en compte des deux premiers paramètres, la sélection finale se fera sur les critères de surface.

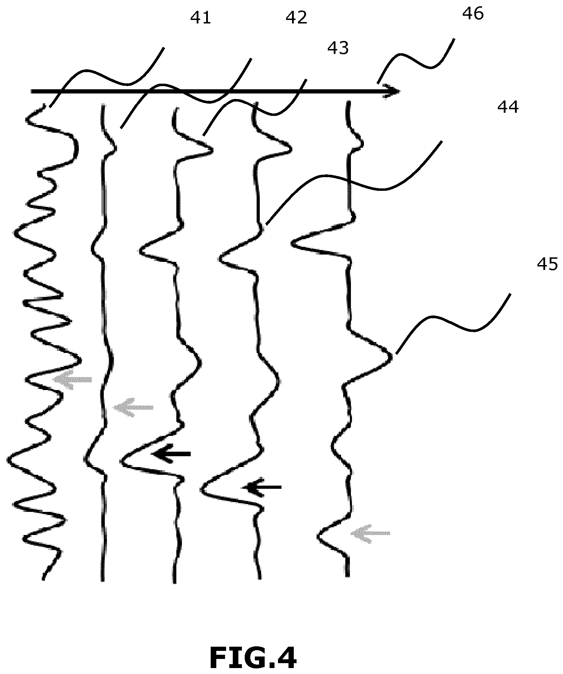

Le premier paramètre est obtenu en recoupant les positions X, Y et Z théoriques des sources et récepteurs lors de l'étape de démigration avec la grille réelle d'acquisition des données sismiques existantes, on récupère les traces brutes c'est-à-dire les mesures effectives du sous-sol depuis ces positions. A partir de ces traces brutes et de l'information de temps pendant lequel la zone d'intérêt apparaît sur les traces brutes, on peut effectuer une sélection qualitative et quantitative sur un sous ensemble de traces potentiellement optimales. Une trace est optimale lorsqu'elle permet la détection d'un changement. L'information de temps est obtenue à l'étape de démigration et est appelée également temps d'intérêt. Les traces fortement bruitées, ou très atténuées, pendant le temps d'intérêt sont écartées. A contrario les traces présentant une forte réflexion, ou réfraction, qu'on appelle les traces propres, sont conservées. Une prise en compte de l'effet des multiples visibles sur les points de tirs et/ou obtenus lors du traitement des données sismiques existantes permet de sélectionner des traces pour lesquelles les forts multiples n'apparaissent pas pendant le temps d'intérêt de chaque trace considérée. La figure 4 montre cinq traces 41, 42, 43, 44 et 45. L'axe 46 en ordonnée représente l'offset, c'est-à-dire la distance source-récepteur. La trace 41 est trop bruitée et les traces 42 et 45 sont trop atténuées pendant le temps d'intérêt. Ces trois traces ne sont donc pas sélectionnées. En revanche les traces 43 et 44 présentent un bon rapport signal sur bruit et une énergie visible pendant le temps d'étude de la zone d'intérêt, elles sont donc considérées comme potentiellement optimales et sont ainsi conservées. Le deuxième paramètre concerne l'information dynamique qui peut être obtenue lorsque les données sismiques 4D sont disponibles. On peut, à partir des images 4D complètes, détecter si un changement a déjà affecté la zone d'intérêt considérée. Si tel est le cas, l'analyse des traces brutes obtenues et provenant des acquisitions de base et ultérieures permet de déterminer les traces présentant les meilleurs effets 4D pour la zone d'intérêt. Ces traces sont celles qui ont le plus contribuées à l'identification de ce changement et sont ainsi optimales pour y détecter de nouveau les effets 4D. En complément des traces sismiques 4D existantes, ou lorsqu'on ne dispose pas de celles-ci, l'utilisation de modèles pétro-élastiques pour la zone d'intérêt couplés au modèle dynamique de réservoir permet de modéliser une acquisition sismique synthétique estimant les effets sismiques induits par la production.

Le troisième paramètre concerne l'information relative aux facteurs de surface obtenue à partir du sous ensemble identifié par la combinaison des deux premiers paramètres ; on peut croiser la position des couples source-récepteur sélectionnés avec les informations de surface. Ce croisement d'information permet de vérifier d'une part la faisabilité pratique du positionnement de ces couples source-récepteur, en vérifiant par exemple que les positions choisies ne se trouvent pas dans une zone d'exclusion. Il permet également de prendre en compte les forts générateurs de bruits sismiques pouvant apparaître entre la ou les données sismiques existantes, comme par exemple une route en construction, une unité de compression de gaz ou un couloir maritime.

Ces étapes permettent d'analyser la faisabilité de la détection sismique active ultralégère.

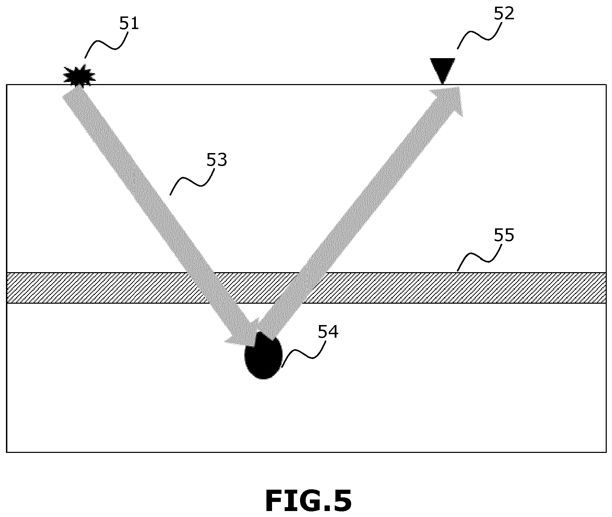

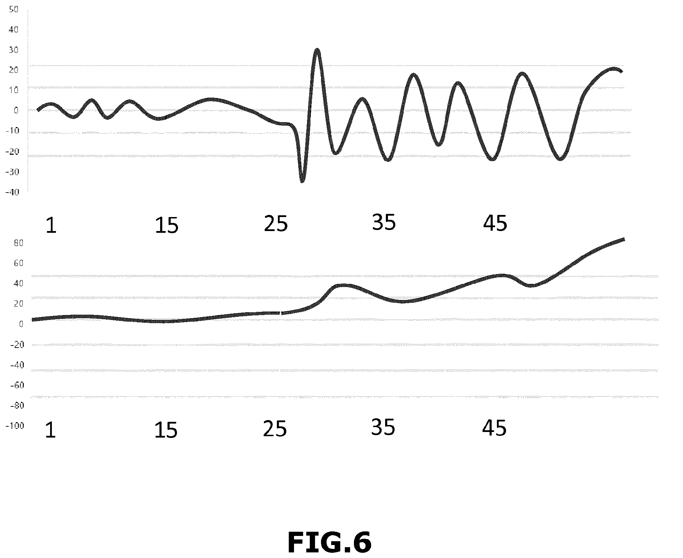

Le procédé décrit jusqu'à maintenant peut être complété afin d'améliorer le traitement sismique des systèmes actifs ultralégers et afin de détecter les changements dans la zone d'intérêt lorsque les couples source-récepteur ont été placés aux emplacements optimaux, de façon permanente ou semi-permanente. Cela permet de focaliser la détection sur la zone d'intérêt sans construire une image complète du sous-sol. Il s'agit d'une approche trace à trace, où chacun des couples source-récepteur sont observés et traités indépendamment les uns des autres. Pour s'affranchir des changements intervenant au-dessus de la zone d'intérêt, on pose l'hypothèse que sur une échelle de temps courte, de l'ordre de 6 mois maximum, il est possible d'identifier dans le sous-sol au moins une zone au-dessus de la zone d'intérêt qui n'est pas sujette à un changement. Cette zone est appelée la zone de référence. Elle sert à obtenir une mesure du bruit ambiant associé au système ultraléger de détection. Elle sert également à corriger les variations arrivant au-dessus de cette zone de référence. Afin de corriger les effets 4D situés au-dessus de la zone de référence, où les variations proches de la surface sont les plus importantes, on utilise la zone de référence comme étalonnage en considérant que la réponse sismique de cette zone ne doit pas changer. Il est alors possible de corriger les variations sismiques de cette zone et d'appliquer cette correction de façon à mettre en évidence les variations dans la zone d'intérêt. Il s'agit de variations dans le temps de l'amplitude, du temps de trajet ou des ondelettes. On peut voir sur la figure 5, la source 51, le récepteur 52, l'onde sismique 53, la zone d'intérêt 54 et la zone de référence 55 précédemment décrite. La figure 6 illustre un exemple d'application à une trace brute du procédé objet de la présente invention. En abscisse, il est indiqué le temps en jour et en ordonnée la différence de temps de trajet de l'onde sismique au cours du temps. Le point de départ du trajet étant la source sismique, puis le réservoir et finalement le récepteur. La courbe supérieure correspond à un enregistrement journalier et la courbe inférieure à la dérive par rapport au premier jour d'enregistrement. On constate une variation importante au 25^{ème} jour ce qui signifie qu'il s'est produit un changement géomécanique. Ce changement géomécanique peut être, par exemple, une saturation, une modification de pression ou de température.

Par ailleurs, lorsque l'on ne considère qu'une seule trace sismique issue d'une acquisition ultralégère, la notion de cellule, ou bin en anglais, n'a plus de sens. La résolution spatiale de la zone détectée est considérée comme étant la zone de Fresnel, elle-même dépendante de la fréquence. Il est alors possible de filtrer par octave afin d'affiner la sensibilité de la détection. En abaissant la fréquence des données reçues, on augmente ainsi la sensibilité de la détection dans les zones d'intérêt plus lointaines. Pour que cela soit possible, le système d'acquisition ultraléger doit avoir émis et enregistré plusieurs gammes de fréquence. Par exemple, pour une vitesse de 5500 mètres par seconde à la zone d'intérêt, les zones de Fresnel situées à 50, 100, 150, 200 et 275 mètres du centre du spot correspondent respectivement à des fréquences de 27, 14, 9, 7 et 5 Hertz, pour un modèle de vitesse homogène et un modèle d'acquisition zéro offset. Ainsi pour une détection de changement à 5 Hertz et qui n'apparait pas à 14 Hertz, cela permet de déduire que le changement observé dans la zone d'intérêt intervient entre 100 et 275 mètres du centre de la zone d'intérêt.

D'autre part, en utilisant les informations obtenues à l'étape de démigration, on peut estimer pour chaque couple source-récepteur la pente d'émission et de réception des ondes sismiques pour illuminer la zone d'intérêt. En émission, il est possible de focaliser l'émission des ondes, ou beam steering en anglais, dans la pente et la direction optimales pour l'illumination de la zone d'intérêt en utilisant plusieurs sources ou une antenne de sources. Ainsi de nombreux facteurs de bruits tels que la diffraction, les échos parasites ou multiples et réflexions parasites sont évités et le seuil de détectabilité est amélioré. En réception, il est possible, en utilisant des récepteurs trois composants, en moyennant une grappe de capteurs proches ou en utilisant une antenne de récepteurs, d'obtenir une trace moyenne ne contenant que les informations sismiques arrivant selon la direction et la pente définies dans l'étape de démigration. Ce filtrage permet de réduire fortement les facteurs de bruit, notamment les multiples, et d'augmenter le seuil de détectabilité. Il s'agit d'augmenter la précision de détection en réduisant la zone de détection au sein de la zone de Fresnel et ainsi mieux focaliser la détection en jouant sur les pentes du beam steering. On peut alors, avec un seul couple source-récepteur, obtenir plusieurs focalisations différentes au sein de cette zone de Fresnel ce qui revient à discriminer dans cette zone plusieurs spots différents. Ces deux filtrages peuvent être mis en œuvre indépendamment ou ensemble afin d'augmenter encore plus le seuil de détectabilité. Si la démigration a été effectuée par gamme d'octave, il est alors possible d'affiner encore plus ce filtrage en modifiant les pentes d'émission et de réception en fonction des octaves. L'invention permet ainsi de conclure à une détection prenant en compte d'une part les variations dans le temps dans la zone d'intérêt par rapport à une zone de référence et d'autre part les évolutions temporelles de ces variations.

L'invention peut également être mise en œuvre pour enregistrer une trace complète pouvant être exploitée pour identifier ensuite d'autres spots dits d'opportunité situés au-dessus ou en dessous du spot initial et de jouer pour chacun sur la focalisation dans la zone de Fresnel.

## Revendications

1. Procédé de détermination du positionnement optimal de couples source-récepteur aptes à acquérir des données sismiques comprenant les étapes suivantes :
- une première étape d'identification d'une zone d'intérêt (32) dans un sous-sol ayant fait l'objet d'une acquisition sismique antérieure au moyen de couples source-récepteur dont la localisation exacte est connue, et utilisé pour obtenir une image du sous-sol ;
- une deuxième étape d'obtention des données sismiques acquises lors de l'acquisition sismique antérieure correspondant à ladite zone d'intérêt pendant un temps d'intérêt ;
- une troisième étape où l'on effectue un tracé inverse de rayons sismiques, total ou partiel, desdites données sismiques correspondant à ladite zone d'intérêt, afin de déterminer les positions de chaque couple source-récepteur (31, 34) ayant contribué, dans l'image dudit sous-sol, à l'image de ladite zone d'intérêt pendant ledit temps d'intérêt ;
- une quatrième étape d'obtention des traces brutes (41, 42, 43, 44, 45) des données sismiques acquises lors de l'acquisition sismique antérieure pour lesdites positions des couples source-récepteur (31, 34) ;
- une cinquième étape de sélection d'au moins une trace brute optimale (43, 44) parmi lesdites traces brutes, l'au moins une trace brute optimale (43, 44) étant celle(s) présentant un rapport signal sur bruit supérieur aux autres traces brutes, ayant contribué à l'identification d'un changement dans la zone d'intérêt ;
- une sixième étape de détermination des positions optimales des couples source-récepteur (31, 34) correspondant à ladite au moins une trace brute optimale (43, 44) ;
- une septième étape de placement de couples source-récepteur (31, 34) auxdites positions optimales ;
- une huitième étape d'acquisition de nouvelles données sismiques auxdites positions optimales.

2. Procédé selon la revendication 1 **caractérisé en ce que** la troisième étape est effectuée par gamme d'octave.

3. Procédé selon l'une quelconque des revendications précédentes **caractérisé en ce que** l'acquisition sismique antérieure est une acquisition 4D.

4. Procédé selon l'une quelconque des revendications précédentes **caractérisé en ce que** la cinquième étape comporte en outre l'utilisation de modèles pétro-élastiques afin de sélectionner les traces brutes optimales (43, 44).

5. Procédé selon l'une quelconque des revendications précédentes **caractérisé en ce que** la cinquième étape comporte en outre une sélection tenant compte des facteurs de surface.

6. Procédé selon l'une quelconque des revendications précédentes **caractérisé en ce que** la cinquième étape comporte en outre une sélection tenant compte d'une zone de référence (55) servant d'étalonnage de variations sismiques.

7. Procédé selon l'une quelconque des revendications précédentes **caractérisé en ce que** la troisième étape comporte en outre l'obtention de la pente et de la direction d'émission et de réception optimales des ondes sismiques pour chaque couple source-récepteur (31, 34).

8. Procédé selon la revendication 7 **caractérisé en ce que** la huitième étape se base sur la pente et la direction d'émission et de réception optimales des ondes sismiques.

## Patentansprüche

1. Verfahren zur Bestimmung der optimalen Positionierung von Quellen-Empfänger-Paaren, die imstande sind, seismische Daten zu erfassen, das die folgenden Schritte umfasst:
- einen ersten Schritt zur Identifizierung eines Bereichs von Interesse (32) in einem Untergrund, der Gegenstand einer vorherigen seismischen Erfassung mit Hilfe von Quellen-Empfänger-Paaren war, deren genaue Lokalisierung bekannt ist, und der verwendet wurde, um eine Abbildung des Untergrunds zu erhalten;
- einen zweiten Schritt zur Gewinnung der seismischen Daten, die während der vorherigen seismischen Erfassung erfasst wurden, die dem Bereich von Interesse während einer Zeit von Interesse entsprechen;
- einen dritten Schritt, bei dem eine vollständige oder teilweise inverse Darstellung der seismischen Strahlen der seismischen Daten, die dem Bereich von Interesse entsprechen, durchgeführt wird, um die Positionen jedes Quellen-Empfänger-Paares (31, 34) zu bestimmen, das in der Abbildung des Untergrunds zur Abbildung des Bereichs von Interesse während der Zeit von Interesse beigetragen hat;
- einen vierten Schritt zur Gewinnung der Rohspuren (41, 42, 43, 44, 45) der seismischen Daten, die während der vorherigen seismischen Erfassung für die Positionen der Quellen-Empfänger-Paare (31, 34) erfasst wurden;
- einen fünften Schritt zur Auswahl mindestens einer optimalen Rohspur (43, 44) aus den Rohspuren; wobei die mindestens eine optimale Rohspur (43, 44) diejenige(n) ist (sind), die ein Signal-Rausch-Verhältnis aufweist (aufweisen), das höher ist als das der anderen Rohspuren, die zur Identifizierung einer Veränderung im Bereich von Interesse beigetragen haben;
- einen sechsten Schritt zur Bestimmung der optimalen Positionen der Quellen-Empfänger-Paare (31, 34), die der mindestens einen optimalen Rohspur (43, 44) entsprechen;
- einen siebten Schritt zur Platzierung von Quellen-Empfänger-Paaren (31, 34) an den optimalen Positionen;
- einen achten Schritt zur Erfassung neuer seismischer Daten an den optimalen Positionen.

2. Verfahren nach Anspruch 1, **dadurch gekennzeichnet, dass** der dritte Schritt nach Oktavband durchgeführt wird.

3. Verfahren nach einem der vorhergehenden Ansprüche, **dadurch gekennzeichnet, dass** die vorherige seismische Erfassung eine 4D-Erfassung ist.

4. Verfahren nach einem der vorhergehenden Ansprüche, **dadurch gekennzeichnet, dass** der fünfte Schritt ferner die Verwendung von petroelastischen Modellen umfasst, um die optimalen Rohspuren (43, 44) auszuwählen.

5. Verfahren nach einem der vorhergehenden Ansprüche, **dadurch gekennzeichnet, dass** der fünfte Schritt ferner eine Auswahl umfasst, die Oberflächenfaktoren berücksichtigt.

6. Verfahren nach einem der vorhergehenden Ansprüche, **dadurch gekennzeichnet, dass** der fünfte Schritt ferner eine Auswahl umfasst, die einen Referenzbereich (55) berücksichtigt, der zur Kalibrierung seismischer Schwankungen dient.

7. Verfahren nach einem der vorhergehenden Ansprüche, **dadurch gekennzeichnet, dass** der dritte Schritt ferner die Ermittlung der optimalen Neigung und der optimalen Sende- und Empfangsrichtung der seismischen Wellen für jedes Quellen-Empfänger-Paar (31, 34) umfasst.

8. Verfahren nach Anspruch 7, **dadurch gekennzeichnet, dass** der achte Schritt auf der optimalen Neigung und der optimalen Sende- und Empfangsrichtung der seismischen Wellen basiert.

## Claims

1. A method for determining the optimum positioning of source-receiver pairs capable of acquiring seismic data comprising:
- a first step of identifying a zone of interest (32) in a subsoil having been the subject of an earlier seismic acquisition by means of source-receiver pairs whose exact location is known, and used to obtain an image of the subsoil;
- a second step of obtaining seismic data acquired during the earlier seismic acquisition corresponding to said zone of interest during a time of interest;
- a third step of applying a partial or total demigration of said seismic data corresponding to said zone of interest, in order to determine the positions of each source-receiver pair (31, 34) having contributed, in the image of said subsurface, to the image of said zone of interest during said time of interest;
- a fourth step of obtaining unprocessed traces (41, 42, 43, 44, 45) of the seismic data acquired during the earlier seismic acquisition for said positions of the source-receiver pairs (31, 34);
- a fifth step of selecting at least one optimal unprocessed trace (43, 44) from said unprocessed traces, the at least one optimal unprocessed trace (43, 44) being the one(s) having a higher signal-to-noise ratio than the other unprocessed traces, having contributed to the identification of a change in the zone of interest;
- a sixth step of determining the optimal positions of the source-receiver pairs (31, 34) corresponding to said at least one optimal unprocessed trace (43, 44);
- a seventh step of placing source-receiver pairs (31, 34) at said optimal positions;
- an eighth step of acquiring new seismic data at said optimal positions.

2. The method according to claim 1, **characterized in that** the third step is performed per octave range.

3. The method according to any of the preceding claims, **characterized in that** the earlier seismic acquisition is a 4D acquisition.

4. The method according to any one of the preceding claims, **characterized in that** the fifth step further comprises the use of petro-elastic models to select the optimum unprocessed traces (43, 44).

5. The method according to any of the preceding claims, **characterized in that** the fifth step additionally comprises a selection taking account of surface factors.

6. The method according to any of the preceding claims, **characterized in that** the fifth step further comprises a selection taking account of a reference zone (55) serving as a calibration of seismic variations.

7. The method according to any of the preceding claims, **characterized in that** the third step further comprises obtaining the optimum slope and direction of transmission and reception of the seismic waves for each source-receiver pair (31, 34).

8. The method according to claim 7, **characterized in that** the eighth step is based on the optimum slope and direction of transmission and reception of the seismic waves.
